(19) Europäisches Patentamt
European Patent Office
Office européen des brevets

(11) Publication number: **0 086 947**
**A1**

# (12) EUROPEAN PATENT APPLICATION

(21) Application number: 83100371.0

(22) Date of filing: 18.01.83

(51) Int. Cl.$^3$: **C 08 L 71/04**
C 08 K 3/34, C 08 K 5/52

(30) Priority: 28.01.82 US 343694

(43) Date of publication of application: 31.08.83 Bulletin 83/35

(84) Designated Contracting States: DE FR GB IT NL

(71) Applicant: GENERAL ELECTRIC COMPANY
1 River Road
Schenectady New York 12305(US)

(72) Inventor: Lee, Gim Fun, Jr.
11 Drawbridge Drive
Albany New York 12203(US)

(74) Representative: Schüler, Horst, Dr. European Patent Attorney et al,
Kaiserstrasse 41
D-6000 Frankfurt/Main 1(DE)

## (54) PPE composition containing impact modifier, flame retardant/plasticizer and melt viscosity reducer.

(57) Flame retardant thermoplastic molding compositions are described which comprise a polyphenylene ether resin, an impact modifier, a flame retardant/plasticizer and, in addition, a low molecular weight hydrocarbon resin. The inclusion of the low molecular weight hydrocarbon results in better melt flow properties without detriment to other desired properties. As an additional unexpected benefit, the compositions exhibit improved impact strength.

EP 0 086 947 A1

10155-8CN-2844

# PPE COMPOSITION CONTAINING IMPACT MODIFIER, FLAME RETARDANT/PLASTICIZER AND MELT VISCOSITY REDUCER

## BACKGROUND OF THE INVENTION

The polyphenylene ether resins are a well-known family of linear thermoplastic engineering resins. A wide variety of these resins and a number of methods for their preparation are disclosed in Hay, U.S. Patent Nos. 3,306,874 and 3,306,875, as well as in Stamatoff, U.S. Patent Nos. 3,257,357 and 3,257,358.

The polyphenylene ether resins are admixable with other polymers as defined by Cizek, U.S. 3,383,435, and with thermoplastic elastomers conventionally used as auxiliary or modifying resins. These are employed to improve the impact resistance of articles molded from the mixtures, compositions of this type are disclosed in Cizek, mentioned above, as well as in Cooper et al, U.S. Patent Nos. 3,974,235; 4,101,504; 4,101,505; and 4,172,929, and elsewhere.

Many of these compositions are normally flammable. The term "normally flammable" as used herein is intended to mean not meeting the V-O and V-1 requirements of the Underwriters' Laboratories Bulletin No. 94 test. It is known that certain agents, e.g., aromatic phosphates, can be added to impart flame retardancy (self-extinguishing) behaviour and to also function as plasticizers for the composition. The resulting compositions often exhibit a combination of high

heat distortion temperature (the temperature at which a molded sample begins to deform), good resistance to breakage or fracture upon impact, and good fire resistance. There have, however, been some difficulties encountered in processing because of the high viscosity of the resins in the molten state. The high melt viscosity lowers the rate at which the resins can be molded in injection molding machines and increases the power required to maintain a given rate of production from extrusion machines. Higher processing temperatures can be used, but this can cause depolymerization, oxidation or other degradation of the resin.

It has been proposed that the addition of low molecular weight hydrocarbon resins to certain polyphenylene ether resin blends can enhance processing by reducing the molding temperature and melt viscosity. Compositions of this type are disclosed in U.S. Patent No. 4,189,411 to Haaf, and U.K. Patent No. 1,344,729.

## INTRODUCTION TO THE INVENTION

It has now been discovered that the inclusion of certain low molecular weight hydrocarbon resins in flame retardant, plasticized blends of polyphenylene ether resin and an impact modifier provides better processability during molding and better surface appearance, e.g., gloss, after molding. This is accomplished, moreover, without detracting from other important properties such as the heat distortion temperature and the flame retardancy. In addition, the presence of the low molecular weight resin results in an increase in the notched Izod impact strength, which is also unexpected.

Preferably, the low molecular weight hydrocarbon resin is selected from among coumarone-indene resins, cyclopentadiene-styrene resins, aromatic petroleum resins, cyclopentadiene-indene resins, phenol-coumarone-indene resins and alpha-methyl styrene resins. Commercially available forms are illustrated in the examples.

DESCRIPTION OF THE INVENTION

The polyphenylene oxide resins useful in accordance with the present kinds of compositions are, as previously indicated, individually well known. There are, however, various preferred composition components. These are primarily ones commonly having applications for which high impact strength is particularly desirable.

The preferred polyphenylene ethers are homo- and copolymers of the formula:

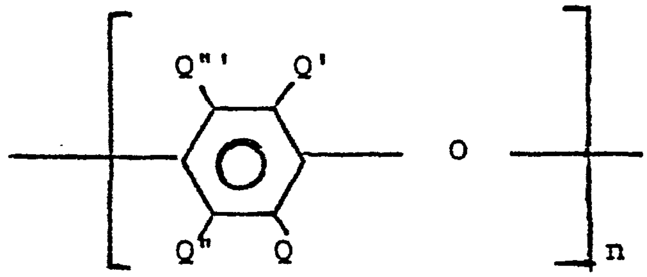

wherein Q, Q', Q" and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

Especially preferred is poly(2,6-dimethyl-1,4-phenylene) ether.

The polyphenylene ether can be prepared by following the procedure described in the above-mentioned patents.

The polyphenylene ether resin is preferably in admixture with one or more polymeric impact modifiers. The impact modifier can be a styrene homopolymer in admixture or otherwise modified with an elastomeric material such as a natural or synthetic rubber, or a styrene containing elastomeric copolymer or terpolymer.

By way of illustration, the impact modifier may be a homopolymer such as polystyrene, polychlorostyrene, poly(alpha-methyl styrene), or poly(para-methyl styrene) which has been modified by natural or synthetic rubber, for example, polybutadiene, polyisoprene, butyl rubber, EPDM rubber, natural rubber, polysulfide rubbers, polyurethane rubbers, etc., elastomeric styrene copolymers such as styrene-butadiene copolymers, styrene-acrylonitrile-butadiene terpolymers (ABS), block copolymers of styrene and a diene in their various forms, for example, A-B, A-B-A, A-B-AB, A-B-A-B-A, etc., random or radial teleblock copolymers of these same materials, as well as hydrogenated forms of the linear, random or radial copolymers in which the aliphatic unsaturation, e.g., of the "B" (diene) block has been reduced; and admixtures of any of the above mentioned styrene homopolymers with any of the above mentioned elastomeric styrene co- and terpolymers.

Blends of the polyphenylene ether resin and impact modifier can contain these materials in virtually any desired proportion, e.g., from 20:1 to 1:2 parts by weight.

Only a small amount of the low molecular weight hydrocarbon is necessary to achieve the benefits of the invention. Amounts of at least about 0.1 percent by weight, and generally from about 1.0 to 5.0 percent by weight, based on the total weight of resins, are typical. It should be understood, however, that the amount of this ingredient can vary widely both within and without this range, depending on particular requirements.

The compositions also contain a flame retardant/plasticizer, preferably in amounts between 5 and 20 parts by weight of the resinous components. In the most preferred embodiments, this material is selected from among aromatic phosphates, such as those having the formula:

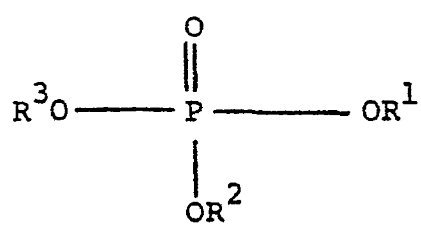

where $R^1$, $R^2$ and $R^3$ can be the same or different and are alkyl, cycloalkyl, aryl, alkyl substituted aryl, halogen substituted aryl, aryl substituted alkyl, halogen, hydrogen and combinations of any of the foregoing, provided that at least one of $R^1$, $R^2$ and $R^3$ is aryl.

Especially preferred is triphenylphosphate.

The molding compositions of the invention can and advantageously do contain one or more of the supplementary non-resinous agents which have heretofore been customarily present in polyphenylene ether resin molding compositions to improve certain other physical and chemical properties of the moldings. The agents include UV stabilizers, antioxidants, strengthening fibers (for example, glass fibers and graphite whiskers), mineral fillers, dyes, and pigments.

Many of such agents are disclosed in U.S. Patent No. 4,172,929 to Cooper, et al.

The supplementary non-resinous agents are present in total amount of between about 1% and 50%, on a weight basis, so as to provide the benefits which these materials have conferred in the past on shaped molded articles made from thermoplastic resins.

The molding compositions of the invention can be prepared by admixing the components together, as in a blender, to form a free-flowing composition which is of suitable particle size for use as a direct feed to molding machines.

Alternatively, the components can be formed into a homogenous melt, preferably under a blanket of inert gas, and then into solid particles of desired size from the melt, either by the extrusion, cooling and chopping method, or by solidifying the melt in any convenient way and grinding the resulting product to the desired particle size.

Processing of the melt is considerably enhanced by the lower melt viscosity which is characteristic of the present compositions.

The invention is further illustrated by the following examples. These are best embodiments of the invention and are not to be construed as limiting. Parts are by weight unless stated otherwise.

## EXAMPLES 1-12

Compositions in accordance with the invention are prepared by compounding poly(,26-dimethyl-1,4-phenylene ether) resin (PPO, General Electric Co.), a polystyrene-polybutadiene-polystyrene block copolymer (Shell Chemical's Kraton G 1651, hydrogenated midblock), a low molecular weight hydrocarbon resin as noted below, triphenyl phosphate flame retardant/plasticizer and small amounts of zinc sulfide and zinc oxide.

Admixture of the ingredients is performed by extrusion through a 28 mm Werner-Pfleiderer twin-screw extruder. The composition is then molded into standard test pieces in a screw injection molding machine and tested for impact strength and other mechanical properties. The results are set forth in the Table below. A control composition is also shown.

TABLE

| EXAMPLE NO. | Composition* Additive (Amt) | Tens. Yld. (psi) | Tens. Str. (psi) | Elong. (%) | Izod Imp. (ft. lb/in. n.) | Gardner (in-lbs) | HDT (°F) | UL-94 1/16" Avg. (sec) | F.C. (inches) | Gloss @45° |
|---|---|---|---|---|---|---|---|---|---|---|
| — | None (control) | 10,630 | 8830 | 37 | 2.4 | 210 | 310 | 2.3/5.0 V-0 | 12½ | 32.0 |
| 1 | Cumar LX509 (2.0) | 11,000 | 9100 | 49 | 3.2 | 200 | 304 | 1.7/5.7 V-0 | 13½ | 52.5 |
| 2 | Cumar LX509 (4.0) | 10,830 | 9270 | 65 | 5.5 | 210 | 292 | 3.0/2.7 V-0 | — | 60.0 |
| 3 | Cumar W-2.5 (2.0) | 10,900 | 9175 | 53 | 3.2 | 200 | 307 | 4.0/5.7 V-0 | 13½ | 55.0 |
| 4 | Cumar W-2.5 (4.0) | 10,770 | 8930 | 60 | 5.1 | 170 | 292 | 4.0/5.3 V-0 | — | 58.5 |
| 5 | Neville 685-180 (2.0) | 10,870 | 9070 | 43 | 3.6 | 190 | 312 | 2.7/4.7 V-0 | 11½ | 28.0 |
| 6 | Neville 685-180 (4.0) | 10,770 | 9270 | 56 | 5.6 | 210 | 295 | 2.7/4.0 V-0 | — | 47.5 |
| 7 | Nevchem 140 (2.0) | 11,075 | 9100 | 37 | 2.6 | 180 | 314 | 1.7/3.7 V-0 | 13 | 40.0 |

TABLE (cont'd)

| | | | | | | | | | | |
|---|---|---|---|---|---|---|---|---|---|---|
| 8 | Nevchem 140 (4.0) | 10,800 | 9030 | 54 | 4.6 | 220 | 293 | 1.7/6.3 V-0 | — | 56.0 |
| 9 | Nebony 100 (4.0) | 11,070 | 8900 | 37 | 5.4 | 180 | 293 | 2.7/5.3 V-0 | — | 58.0 |
| 10 | Nevillac Hard (4.0) | 11,000 | 8770 | 46 | 5.8 | 190 | 280 | 2.7/4.0 V-0 | — | 60.0 |
| 11 | Nevillac Soft (4.0) | 11;200 | 8870 | 34 | 6.2 | 190 | 282 | 2.0/2.7 V-0 | — | 62.0 |
| 12 | Resin 18-290 (4.0) | 10,530 | 9170 | 75 | 5.6 | 210 | 277 | 3.7/3.3 V-0 | — | 61.5 |

*All blends contain PPO/TPP/Kraton G 1651/ZnS/ZnO - 92/8/8/0.15/0.15

Cumar LX 509 and W 2.5 are coumarone-indene resins from Neville Chemical Co.

Neville LX685-180 is a cyclopentadiene-styrene resin from Neville.

Nevchem 140 is an aromatic petroleum resin from Neville.

Nebony 100 is a cyclopentadiene-indene resin from Neville.

Nevillac hard and soft are phenol-coumarone-indene resins from Neville.

Resin 18-290 is an alpha methyl styrene resin from Amoco.

It is seen that the noted Izod impact strength is considerably enhanced by the presence of the hydrocarbon resin in most cases. The flame retardancy and heat distortion temperature are maintained. The surface appearance (gloss) of the molded samples is very good.

The above-mentioned patents and/or publications are incorporated herein by reference. Obviously, other modifications and variations of the present invention are possible, in light of the above disclosure. For instance, instead of poly(2,6-dimethyl-1,4-phenylene ether), copolymers such as poly(2,6-dimethyl-co-2,3,6-trimethyl-1,4-phenylene ether) can be used. Instead of the block copolymer of styrene and butadiene, other impact modifiers can be used. It is, therefore, to be understood that changes may be made in the specific embodiments described without departing from the scope of the invention as defined by the appended claims.

CLAIMS:

1. A plasticized, flame retardant thermoplastic molding composition, comprising an admixture of

(a) a normally flammable compositions of a polyphenylene ether resin and an impact modifier;

(b) an effective amount of flame retardant/ plasticizer; and

(c) a low molecular weight hydrocarbon resin in an amount sufficient to depress the melt viscosity of the composition.

2. A composition according to Claim 1, comprising at least 0.1 percent by weight of the low molecular weight hydrocarbon resin, based on the combined weight of (a) and (b).

3. A composition according to Claim 2, which contains from about 1.0 to 5.0 percent by weight of the low molecular weight hydrocarbon resin.

4. A composition according to Claim 1, in which the low molecular weight hydrocarbon is selected from among coumarone-indene resins, cyclopentadiene-styrene resins, aromatic petroleum resins, cyclopentadiene-indene resins, phenol-coumarone-indene resins and alpha methyl styrene resins, and mixtures of any of the foregoing.

5. A composition according to Claim 1, in which the polyphenylene ether resin is a homo- or copolymer having the formula:

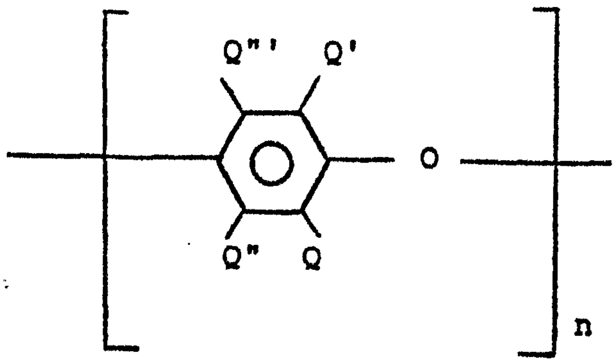

wherein Q, Q', Q" and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atom and the phenol nucleus, and Q', Q" and Q"' in addition may be halogen with the proviso that Q and Q' are preferably free of a tertiary carbon atom; and n represents the total number of monomer residues and is an integer of at least 50.

6. A composition according to Claim 1, in which the polyphenylene ether resin is poly(2,6-dimethyl-1,4-phenylene ether).

7. A composition according to Claim 1, in which the impact modifier is a block copolymer of styrene and butadiene.

8. A composition according to Claim 7, in which the butadiene block has been hydrogenated.

9. A composition according to Claim 1, in which the flame retardant agent/plasticizer is an aromatic phosphate.

10. A composition according to Claim 8, in which the flame retardant/plasticizer is triphenyl phosphate.

11. A composition according to Claim 1, which comprises from 20:1 to 1:2 parts by weight of polyphenylene ether resin: impact modifier.

12. A composition according to Claim 10, which contains from about 5 to 20 parts of the flame retardant/ plasticizer, based on the weight of (a).

European Patent Office

# EUROPEAN SEARCH REPORT

0086947
Application number
EP 83 10 0371

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | NL-A-7 901 735 (GENERAL ELECTRIC CO.)<br>* Page 6, line 7; table A; claims 1,2,4,6-8 *<br>--- | 1,3-8 | C 08 L 71/04<br>C 08 K 3/34<br>C 08 K 5/52 |
| Y | US-A-3 281 506 (A.F. SHEPARD et al.)<br>* Column 1, lines 30-33 *<br>--- | 1,3-8, 11,12 | |
| Y | DE-A-2 136 747 (UNIROYAL INC.)<br>* Claims 1, 9-15 *<br>--- | 1,3-7, 9,10 | |
| D,Y | US-A-4 101 504 (G.D. COOPER et al.)<br>* Claims 1, 29 *<br>--- | 1,3-7, 9,10 | TECHNICAL FIELDS SEARCHED (Int. Cl. 3) |
| A | GB-A-2 074 171 (GENERAL ELECTRIC CO.)<br>* Examples 1, 2 *<br>----- | 1,5,7, 9,10 | C 08 K 3/34<br>C 08 K 5/52<br>C 08 L 71/04 |

The present search report has been drawn up for all claims

| Place of search | Date of completion of the search | Examiner |
|---|---|---|
| BERLIN | 21-04-1983 | WIBMER P.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82